# EUROPEAN PATENT APPLICATION

(11) **EP 2 557 438 A1**
(43) Date of publication of application: **13.02.2013**
(21) Application number: 11765912.8
(22) Date of filing: 05.04.2011
(51) Int. Cl.: G02B 5/08, C03C 10/02, F21V 7/22

(54) **MATERIAL FOR LIGHT-REFLECTING SUBSTRATE, LIGHT-REFLECTING SUBSTRATE AND LIGHT EMITTING DEVICE USING THE SAME**

(30) Priority: 09.04.2010 JP 2010090385
(71) Applicant: Nippon Electric Glass Co., Ltd., Otsu-shi Shiga 520-8639 (JP)
(72) Inventor: UMAYAHARA Yoshio, Otsu-shi Shiga 520-8639 (JP)
(74) Representative: Henkel, Breuer & Partner
(86) International application number: PCT/JP2011/058620
(87) International publication number: WO 2011/126012

(57) **Abstract**

Disclosed is a material which allows easy manufacture of a light-reflecting substrate with high optical reflectivity. The disclosed material for the light-reflecting substrate contains an Nb₂O₅ crystal powder and a glass powder substantially free of CaO in the composition thereof.

## Description

### Technical Field

The present invention relates to a material for producing a light reflective substrate having high optical reflectivity, a light reflective substrate, and a light emitting device using the same.

### Background Art

LED and an organic EL device consume less electricity, and recently attract the attention as a new lighting device. In a device for lighting, a substrate and a package material, having high optical reflectance are required in order to effectively utilize light emitted from a luminous body. For example, alumina ceramic having relatively high optical reflectance, or a substrate having provided on the alumina ceramic an optical reflective film comprising a metal has been used as the conventional package material of LED element. However, optical reflectance of a substrate and a package material is required to be further improved in order to obtain sufficient quantity of light as automotive lighting, display lighting and general lighting.

To achieve the above object, Patent Document 1 describes a light reflective substrate obtained by sintering a mixture of a glass powder and a ceramic powder, as a substrate having relatively high optical reflectivity. Specifically, the light reflective substrate described in Patent Document 1 comprises a borosilicate glass raw material, alumina, and 5% by mass or more of a scatterer selected from niobium pentoxide, zirconium oxide, tantalum pentoxide and zinc oxide, wherein anorthite is crystallized from the borosilicate glass raw material. Thus, in Patent Document 1, high optical reflectivity is achieved by scattering by three kinds of different crystals of alumina, a scatterer and anorthite.

### Citation List

### Patent Document

Patent Document 1: JP-A 2009-162950

### Summary of the Invention

### Problems to be solved by the Invention

To crystallize anorthite (CaO.Al₂O₃.2SiO₂) in a glass at a sintering temperature as in the light reflective substrate described in Patent Document 1, compositional design is difficult. Furthermore, because a scatterer is contained in a large amount of 5% by mass or more, problems on production occur such that fluidity of the raw material powder is deteriorated when forming the raw material into paste, and forming of a green sheet becomes difficult to be conducted.

The present invention has been made in view of the above circumstances, and has an object to provide a material with which a light reflective substrate having high optical reflectance can be easily produced.

### Means for Solving the Problems

The present inventor finds that a light reflective substrate having high optical reflectance can easily be produced by using a material obtained by mixing crystals having high refractive index characteristics and a glass powder having a specific composition having low reactivity with the crystals, and proposes the finding as the present invention.

That is, the present invention relates to a material for a light reflective substrate comprising: a glass powder which does not substantially contain CaO as a composition; and Nb₂O₅ crystal powder.

A refractive index of a glass generally used in a light reflective substrate is generally from 1.5 to 1.6. On the other hand, a refractive index of Nb₂O₅ crystal is 2.33, and has very high refractive index among the oxide crystals. For this reason, a light reflective substrate produced using the material of the present invention can increase refractive index difference between a glass phase and a crystal phase. As a result, light reflectance on a surface of a light reflective substrate can remarkably be improved.

In the case that Nb₂O₅ crystals are dispersed in a glass containing CaO as a composition, a desired optical reflectance is difficult to be obtained. The reason for this is that Nb₂O₅ crystals easily react with CaO in a glass powder in a firing step of a material for a light reflective substrate, and a large amount of Nb₂O₅ crystals is dissolved in a glass powder. In the light reflective substrate of the present invention, a glass powder does not substantially contain CaO as a composition, and therefore, Nb₂O₅ crystals are difficult to react with a glass powder. As a result, even in the case that the content of Nb₂O₅ crystals is small, good optical reflection characteristics can be achieved. Furthermore, CaO is a component which is easy to decrease weatherability of a glass. Therefore, the light reflective substrate obtained using the material of the present invention which does not substantially contain CaO in a glass powder exerts the effect that deterioration with time is difficult to be caused.

The term "does not substantially contain CaO" used in the present invention means that CaO is not intentionally added to a glass, and does not mean that unavoidable impurities are completely excluded. Specifically, the term means that the CaO content including impurities is 0.1 % by mass or less.

Secondly, the material for a light reflective substrate of the present invention is characterized that the content of the Nb₂O₅ crystal powder is 0.3% by mass or more and less than 5% by mass.

Thirdly, the material for a light reflective substrate of the present invention is characterized that the glass powder comprises at least SiO₂ and B₂O₃ as a composition.

According to the constitution, refractive index of a glass matrix in the light reflective substrate is easy to be decreased, and refractive index difference between a glass matrix and Nb₂O₅ crystals can be increased. As a result, reflection at the interface between those is increased, and reflectance of the light reflective substrate can be enhanced.

Fourthly, the material for a light reflective substrate of the present invention is characterized to further comprise at least one kind of ceramic powder selected from alumina, quartz, zirconia, titanium oxide, forsterite, cordierite, mullite and zircon.

According to the constitution, mechanical strength and optical reflectance of the light reflective substrate can further be improved.

Fifthly, the material for a light reflective substrate of the present invention is characterized that the content of the ceramic powder is from 0.1 to 75% by mass.

Sixthly, the material for a light reflective substrate of the present invention is characterized to have a green sheet form.

Seventhly, the present invention relates to a light reflective substrate comprising a sintered body of the material for a light reflective substrate described in any one above.

Eighthly, the present invention relates to a light reflective substrate comprising: a glass matrix which does not substantially contain CaO as a composition; and Nb₂O₅ crystals dispersed in the glass matrix.

Ninthly, the light reflective substrate of the present invention is characterized to have average optical reflectance at a wavelength of from 400 to 800 nm of 80% or more.

Tenthly, the present invention relates to a light emitting device comprising the light reflective substrate described in any one above.

### Mode for Carrying out the Invention

The material for a light reflective substrate according to the present invention comprises a glass powder and Nb₂O₅ crystal powder.

It is preferable that content of Nb₂O₅ crystals in the material for a light reflective substrate is 0.3% by mass or more, 1.0% by mass or more, and particularly 1.5% by mass or more. When the content of Nb₂O₅ crystals is less than 0.3% by mass, sufficient optical reflectance is difficult to be obtained. On the other hand, when the content of Nb₂O₅ crystals is too large, densification of the light reflective substrate is impaired, which is not preferred. Furthermore, fluidity is easy to be decreased in forming a raw material powder into a slurry, and green sheet forming may be difficult to be conducted. Therefore, the content of Nb₂O₅ crystals is preferably less than 5% by mass.

Particle diameter of Nb₂O₅ crystals is not particularly limited. However, good optical reflectance can be obtained even at short wavelength in the vicinity of, for example, 400 nm with decreasing the particle diameter. On the other hand, an interface between the crystals and a glass matrix is decreased with increasing the crystal particle diameter, resulting in decrease in optical reflectance. From the standpoint of this, it is preferable that the crystal particle diameter is 10 µm or less, 5 µm or less, and particularly 1 µm or less.

A glass powder which does not substantially contain CaO as a composition is used as the glass powder in the present invention. When the glass composition contains CaO, desired optical reflectance is difficult to be obtained for the reasons described above. On the other hand, when the glass composition contains at least SiO₂ and B₂O₃ as a composition, refractive index of the glass matrix is easy to be decreased, and refractive index difference between the glass matrix and the Nb₂O₅ crystals can be increased. As a result, reflection at the interface between those is enhanced, and optical reflectance of the light reflective substrate can be increased.

Examples of the glass powder which can be used in the present invention include SiO₂-B₂O₃-A1₂O₃ glass, and SiO₂-B₂O₃-R₂O (R is one kind or more of Li, Na and K) glass.

It is preferable that the SiO₂-B₂O₃-Al₂O₃ glass contains in terms of % by mass as a composition, from 30 to 70% of SiO₂, from 10 to 40% of BaO, from 2 to 20% of B₂O₃, and from 2 to 20% of Al₂O₃.

The reason for limiting the glass composition as above is as follows.

SiO₂ is a component of increasing chemical durability. It is preferable that SiO₂ content is from 30 to 70%, from 40 to 70%, and particularly from 45 to 60%. When the SiO₂ content is less than 30%, weatherability tends to be remarkably deteriorated. On the other hand, when the SiO₂ content is larger than 70%, a glass tends to be difficult to melt.

BaO is a component of decreasing a liquidus temperature and adjusting meltability. It is preferable that BaO content is from 10 to 40%, from 10 to 30%, and particularly from 15 to 30%. When the BaO content is less than 10%, a melting temperature is too high. On the other hand, when the BaO content is larger than 40%, devitrification is easy to occur.

B₂O₃ is a component of improving meltability and decreasing a liquidus temperature. It is preferable that the B₂O₃ content is from 2 to 20%, from 2 to 15%, and particularly from 4 to 13%. When the B₂O₃ content is less than 2%, not only meltability is deteriorated, but a liquidus temperature is increased, and as a result, devitrification easily occurs when forming. On the other hand, when the B₂O₃ content is larger than 20%, weatherability tends to be decreased.

Al₂O₃ is a component of improving meltability and weatherability. The Al₂O₃ content is preferably from 2 to 20%, and particularly preferably from 2.5 to 18%. When the Al₂O₃ content is less than 2%, meltability tends to be easily decreased. On the other hand, when the Al₂O₃ content is more than 20%, devitrification easily occurs.

It is preferable that the SiO₂-B₂O₃-R₂O (R is one kind or more of Li, Na and K) glass contains in terms of % by mass as a composition, from 40 to 75% of SiO₂, from 10 to 30% of B₂O₃, and from 0.5 to 20% of R₂O.

The reason for limiting the glass composition as above is as follows.

SiO₂ is a network former of a glass. The SiO₂ content is preferably from 40 to 75%, and particularly preferably from 50 to 70%. When the SiO₂ content is less than 40%, vitrification is difficult to occur. On the other hand, when the SiO₂ content is larger than 75%, a glass tends to be difficult to melt.

B₂O₃ is a component of improving meltability. The B₂O₃ content is preferably from 10 to 30%, and particularly preferably from 15 to 25%. When the B₂O₃ content is less than 10%, melting becomes difficult. On the other hand, when the B₂O₃ content is larger than 30%, weatherability tends to be decreased.

R₂O is a component of improving meltability. The R₂O content is from 0.5 to 20%, and preferably from 3 to 15%. When the R₂O content is less than 0.5%, meltability tends to be remarkably deteriorated. On the other hand, when the R₂O content is larger than 20%, weatherability is easily decreased.

Any of the glass composition can contain P₂O₅, MgO, BaO, SrO, ZnO, ZrO₂, other oxide components, halide components, nitride components, and the like, in addition to the above components. However, the total content of these other components is preferably limited to 20% or less.

Average particle diameter D₅₀ of the glass powder is not particularly limited. However, when the average particle diameter D₅₀ is too large, optical reflectance and mechanical strength of a light reflective substrate are easily decreased. Therefore, the average particle diameter D₅₀ is preferably 15 µm or less, and particularly preferably 7 µm or less. On the other hand, when the average particle diameter D₅₀ is too small, production costs are increased. Therefore, the average particle diameter D₅₀ is preferably 0.5 µm or more, and particularly preferably 1.5 µm or more.

The light reflective substrate can contain a ceramic powder as a filler in order to increase mechanical strength and optical reflectance of the light reflective substrate, other than Nb₂O₅ crystals. Examples of the ceramic powder include alumina, quartz, zirconia, titanium oxide, forsterite, cordierite, mullite and zircon. These can be used alone or as mixtures of two kinds or more thereof.

It is preferable that the content of the ceramic powder in the material for a light reflective substrate is from 0.1 to 75% by mass, from 2 to 75% by mass, and particularly from 20 to 50% by mass. When the ceramic powder content is less than 0.1% by mass, an effect of increasing mechanical strength and optical reflectance of the light reflective substrate is difficult to be achieved. On the other hand, when the ceramic powder content is larger than 75% by mass, many pores are generated in the light reflective substrate, and mechanical strength and optical reflectance are easy to be decreased.

The light reflective substrate of the present invention comprises a glass matrix which does not substantially contain CaO as a composition, and Nb₂O₅ crystals dispersed therein, and can be produced by, for example, preforming the material for a light reflective substrate of the present invention into various forms such as a plate form, a sheet form and a block form, and then firing.

As the preforming method, various methods can be selected. Examples of the preforming method include a green sheet (tape) forming method, a slip casting method, a screen printing method, a mold pressing method, an aerosol deposition method, a spin coating method, and a die coating method.

The green sheet forming method is a method of adding a resin binder, a plasticizer and a solvent to a raw material powder comprising a glass powder and Nb₂O₅ crystal powder, kneading the resulting mixture to prepare a slurry, and preparing a green sheet (tape) from the slurry using a sheet forming machine such as a doctor blade. According to this method, in producing a ceramic laminated circuit board having light reflective function by, for example, laminating a green sheet, it is easy to form a circuit in a board, to embed a metal material having high thermal conductivity by forming an electric via-hole, or to form a heat discharge passage by a thermal via-hole.

The screen printing method is a method of adding a resin binder and a solvent to an inorganic powder, kneading the resulting mixture to prepare a paste having a certain level of high viscosity, and forming a film on a surface of a substrate using a screen printing machine. According to this method, a light reflecting portion of a specific pattern can easily be formed on the surface of a substrate. Furthermore, a film having a desired thickness of from about several microns to about several hundred microns can be formed by adjusting viscosity of a paste, thickness of a screen, the number of printing, and the like.

It is preferable that average optical reflectance at a wavelength of from 400 to 800 nm of the light reflective substrate of the present invention is 80% or more, 85% or more, and particularly 88% or more.

A light-permeable functional layer can be provided on a surface of the light reflective substrate of the present invention. For example, a protective coating against scratches, stain and chemical corrosion, and a functional layer having a function as a wavelength filter, optical diffusion or an interference layer can be formed while maintaining optical reflective function on the surface of the light reflective substrate.

The functional layer is not particularly limited, and conventional materials such as glasses such as silicate glass; metal oxides such as silica, alumina, zirconia, tantalum oxide and niobium oxide; and resins such as polymethyl methacrylate, polycarbonate and polyacrylate can be used.

### Examples

The present invention is described below by reference to Examples. However, the invention is not construed as being limited to those Examples.

Table 1 shows Examples and Comparative Examples.

**Table 1**

| (% by mass) | | Example | | | | Comparative Example | | |
|---|---|---|---|---|---|---|---|---|
| | | 1 | 2 | 3 | 4 | 1 | 2 | 3 |
| Glass powder composition | SiO₂ | 55 | 40 | 50 | 60 | 55 | 40 | 50 |
| | Al₂O₃ | 14 | | 10 | | 14 | | 10 |
| | B₂O₃ | 6 | 15 | 20 | 25 | 6 | 15 | 20 |
| | MgO | 5 | 10 | | | 5 | 10 | |
| | CaO | | | | | | | 10 |
| | BaO | 20 | 25 | | | 20 | 25 | |
| | ZnO | | 3 | 5 | | | 3 | |
| | Li₂O | | 2 | | 6 | | 2 | |
| | Na₂O | | 2 | 5 | 9 | | 2 | 5 |
| | K₂O | | 3 | 5 | | | 3 | |
| | TiO₂ | | | 2 | | | | 2 |
| | ZrO₂ | | | 2 | | | | 2 |
| | P₂O₅ | | | 1 | | | | 1 |
| Raw material powder composition | Glass powder | 65.2 | 96 | 77 | 78 | 70 | 100 | 77 |
| | Nb₂O₅ | 4.8 | 4 | 3 | 2 | | | 3 |
| | Alumina | 30 | | | | 30 | | |
| | Zirconia | | | 10 | | | | 10 |
| | Quartz | | | 10 | 20 | | | 10 |
| Nb₂O₅ content (% by mass) | | 4.5 | 3.8 | 2.9 | 1.9 | 0 | 0 | 0 |
| Optical reflectance (%) | | 92 | 87 | 82 | 90 | 78 | 70 | 77 |

Light reflective substrate of each of Examples and Comparative Examples was produced as follows. Raw material powders were formulated so as to obtain glasses having compositions shown in Table 1 and melted in an electric furnace kept at from 1,400 to 1,600°C for 2 hours. The molten glass obtained was poured into a pair of water-cooled rollers to obtain a film-shaped glass. The glass film was pulverized with alumina ball mill to obtain a glass powder (average particle diameter D₅₀ = 3 µm).

Various inorganic powders were mixed with the glass powder in proportions shown in Table 1. The resulting mixed powder was press molded with a mold having a diameter of 20 mm to prepare columnar pellets. The pellets were fired at 950°C for 2 hours to obtain a light reflective substrate.

The content of Nb₂O₅ crystals in the light reflective substrate was calculated based on peak intensity by powder X-ray diffraction.

Optical reflectance of the light reflective substrate obtained was measured. The results are shown in Table 1. The optical reflectance was evaluated by average optical reflectance at a wavelength of from 400 to 800 nm measured by spectrophotometer.

As shown in Table 1, the light reflective substrates of Examples 1 to 4 contain Nb₂O₅ crystals having high refractive index, and therefore had high reflectance of 82% or more. On the other hand, the light reflective substrates of Comparative Examples 1 and 2 do not contain Nb₂O₅ crystals, and therefore had low optical reflectance of 78% or lower. Furthermore, in Comparative Example 3 using a glass powder containing CaO as a raw material, the optical reflectance was low as 77%.

Although the present invention has been described in detail and by reference to the specific embodiments, it is apparent to one skilled in the art that various modifications or changes can be made without departing from the spirit and scope of the present invention.
The present application is based on a Japanese Patent Application filed on April 9, 2010 (Japanese Patent Application No. 2010-090385), the entire content of which is incorporated herein by reference. All references cited herein are incorporated in its entirety.

### Industrial Applicability

The material for a light reflective substrate of the present invention is suitable for uses as an optical reflective substrate used in displays such as LED package and organic EL, light emitting devices such as automotive lighting and general lighting.

## Claims

1. A material for a light reflective substrate comprising: a glass powder which does not substantially contain CaO as a composition; and Nb₂O₅ crystal powder.

2. The material for a light reflective substrate according to claim 1, wherein the content of the Nb₂O₅ crystal powder is 0.3% by mass or more and less than 5% by mass.

3. The material for a light reflective substrate according to claim 1 or 2, wherein the glass powder comprises at least SiO₂ and B₂O₃ as a composition.

4. The material for a light reflective substrate according to any one of claims 1 to 3, which further comprises at least one kind of ceramic powder selected from alumina, quartz, zirconia, titanium oxide, forsterite, cordierite, mullite and zircon.

5. The material for a light reflective substrate according to claim 4, wherein the content of the ceramic powder is from 0.1 to 75% by mass.

6. The material for a light reflective substrate according to any one of claims 1 to 5, which has a green sheet form.

7. A light reflective substrate comprising a sintered body of the material for a light reflective substrate according to any one of claims 1 to 6.

8. A light reflective substrate comprising: a glass matrix which does not substantially contain CaO as a composition; and Nb₂O₅ crystals dispersed in the glass matrix.

9. The light reflective substrate according to claim 7 or 8, which has average optical reflectance at a wavelength of from 400 to 800 nm of 80% or more.

10. A light emitting device comprising the light reflective substrate according to any one of claims 7 to 9.
